# EUROPEAN PATENT SPECIFICATION

(11) **EP 2 703 644 B1**
(45) Date of publication and mention of the grant of the patent: **03.08.2016**
(21) Application number: 12382332.0
(22) Date of filing: 27.08.2012
(51) Int. Cl.: F03D 80/00, F03D 7/02

(54) **Angular positioning system for a wind turbine**
Winkelpositionierungssystem für eine Windturbine
Système de positionnement angulaire d'une éolienne

(43) Date of publication of application: 05.03.2014
(73) Proprietor: Alstom Wind, S.L.U., 08005 Barcelona (ES)
(72) Inventor: Betran Palomas, Jaume, 08172 SANT CUGAT DEL VALLÈS (ES)
(74) Representative: ZBM Patents - Zea, Barlocci & Markvardsen

(56) References cited:
- EP-A1- 2 458 203
- WO-A2-2008/006020
- DE-A1-102010 019 444
- US-A1- 2011 188 988
- US-A1- 2012 070 280

## Description

An angular positioning system for a wind turbine as defined in the preamble of claim 1 is herein disclosed. The present angular positioning system is intended to be used in a wind turbine pitch blade mechanism. However, the present angular positioning system is not limited to such particular application and can be used in many others, such as for example a wind turbine nacelle yaw mechanism.

The present angular positioning system mainly comprises first and second mutually rotatable elements and driving means for driving said first and second mutually rotatable elements in rotation. The driving means of the angular positioning system comprise one or more hydraulic chambers that are defined by at least a first portion of the first element and a second portion of the second element.

A wind turbine as defined in the preamble of claim 15 and comprising such angular positioning system is also herein disclosed. The angular positioning system in said wind turbine serves the purpose of driving in rotation the first and the second mutually rotatable elements of the wind turbine.

### BACKGROUND

Known wind turbines are provided with angular positioning systems such as the blade pitch mechanism.

The rotor of a wind turbine comprises a hub and a number of blades that are mounted on the hub. Although the blades can be directly bolted to the hub and then stalled thereto, the blades are usually attached to the hub through the pitch mechanism.

The pitch mechanism serves the purpose of adjusting the angle of attack of the blades according to the wind speed in order to control the hub rotational speed. This is carried out by rotating each blade around its longitudinal axis, that is, the axis extending from the blade root to the blade tip.

The rotational orientation of the blades for adjusting their angle of attack allows the load on the blades to be controlled. By controlling the blade pitch angle at any given the hub rotational speed can be suitably controlled according to specific power production requirements.

Adjusting the angle of attack of the blades also serves the purpose of performing a rotor braking function. This is achieved by moving the blades through the wind turbine pitch mechanism into a blade feather position. This position allows the blades from being protected from damages and wear which could lead to malfunction.

Known wind turbine pitch mechanisms typically comprise a pitch bearing. The pitch bearing is arranged between the rotor hub and the rotor blade for ensuring proper rotation of the rotor blade relative to the hub as stated above.

The pitch bearing generally comprises a number of rows, such as two or three, of rolling elements, usually balls. The rolling elements transfer the torque from the blades to the hub and withstand the operating working loads. The pitch bearing further comprises a number of bearing races, such as two: an outer, larger race bearing, and an inner, smaller bearing race. The rolling elements of the pitch bearing are provided between said bearing races.

In a pitch bearing of a common wind turbine pitch mechanism, one of the pitch bearing races, e.g. the outer bearing race, is connected to the hub, while the other pitch bearing race, e.g. the inner bearing race, is connected to a blade root portion (or sometimes to an extender).

Standard pitch mechanisms further comprise a pitch drive. Common pitch drives comprise a motor such as an electric servomotor, a drive pinion, and an annular gear meshing with the pinion. The annular gear is attached to the inner bearing race of the pitch bearing. Rotation of the inner bearing race causes rotation of the outer bearing race of the pitch bearing and thus rotation of the rotor blade attached thereto. This causes the blade pitch angle to be varied. The pitch drive therefore actively rotates the blades along their longitudinal axes for their accurate angular positioning in order to adjust the angle of attack as stated above. One example of this mechanism is disclosed in document US2012114487.

Other driving means may comprise, for example, hydraulically actuators causing each rotor blade to rotated the desired pitch angle. One example is disclosed in document EP2458203.

DE102010019444 discloses a device for actuating two rotatable parts in a wind turbine rotor comprising a cylinder comprising an operating pressure chamber driven by a pump that feeds hydraulic fluid therein and an emergency operation pressure chamber that is in fluid communication with a pressure accumulator.

US2011188988 refers to a plain bearing assembly for a wind turbine rotor comprising inner and outer members associated with the blade and the hub, respectively. The bearing further includes fluid cavities associated with the outer or the inner member coupled to a pump for creating a fluid film between the inner and outer members. Associated with such bearing is a standard drive assembly for driving the wind turbine pitch mechanism comprising a motor having a toothed gear that is coupled to a plurality of teeth formed in an inner surface rib of the bearing inner member.

As it is known, the angular displacement in blade pitching is small. The pitch mechanism of a wind turbine allows the blade to be rotated around its longitudinal axis from 0° to 90°. When the wind turbine is operating in normal conditions the blade pitch angle may range from about 0° to about 25° depending on the wind speed and therefore the power. When the wind speed is above 25 - 30 m/s the blade pitch angle may be 90° in order to stop the wind turbine rotor to protect the assembly. Therefore, not all of the rolling elements in common wind turbine pitch mechanisms are fully used.

When rotor blades are rotated through known pitch mechanisms high radial forces are generated. This results in high wear on the teeth of the drive pinion and the annular gear of the pitch mechanism. Loads are concentrated on specific areas of the bearing races which may lead to failure.

In addition, wind turbines are becoming increasingly larger and consequently blades are becoming increasingly heavier. Bearings base their behaviour on very small contact regions, namely those of the rolling elements with the bearing races. Bigger bearings will be slenderer and therefore bigger deformations will be generated. This can undesirably compromise good load transmissions between rolling elements and bearing races.

There is therefore a need for an angular positioning system that can be used, for example, in a pitch blade mechanism, and/or other rotating parts in wind turbine applications, which can at least mitigate the above disclosed disadvantages.

### SUMMARY

An angular positioning system for a wind turbine as defined in claim 1 is disclosed herein. A wind turbine comprising said angular positioning system as defined in claim 13 is also disclosed. The angular positioning system in the present wind turbine is suitable for driving at least one of two mutually rotatable elements in rotation. Advantageous embodiments are defined in the dependent claims.

The present angular positioning system comprises first and second mutually rotatable elements. In the specific embodiment in which the angular positioning system is applied to the pitch blade mechanism in a wind turbine, the first and second mutually rotatable elements correspond to the blade and the hub of the wind turbine rotor, respectively.

The angular positioning system further comprises driving means for driving at least one of said elements in rotation. The driving means comprise at least one hydraulic chamber. The volume of the hydraulic chamber is defined by the relative position of the first and second elements in the plane of rotation. The plane of rotation here is a plane arranged substantially at a right angle to the axis of rotation of both elements. Therefore, depending on the relative angular rotation of the first and second elements and hence the angular distance between the first and second portions, the hydraulic chamber or hydraulic chambers will have a greater or smaller volume. As a consequence of such arrangement, expansion of at least one of the hydraulic chambers causes the elements to be rotated to each other.

In one specific embodiment of the present angular positioning system, the volume of hydraulic chamber is defined by at least a first portion of the first element and a second portion of the second element. The portions of the first element and the second element may be a protrusion thereof extending in opposite directions to each other, respectively

In an alternative embodiment of the present angular positioning system, the hydraulic chamber can be defined by the space between at least two mutually spaced apart portions of one of the first and second elements. The mutually spaced apart portions are also in this case protrusions radially extending from the element in question. In this embodiment, a respective protruding portion of the other of the first and second elements is allowed to slide inside the hydraulic chamber thus defining corresponding variable volume sub-chambers.

The driving means of the present angular positioning system further comprises pump means for injecting hydraulic fluid such as oil into the hydraulic chamber for causing the expansion of the hydraulic chamber as stated above. The pump means are part of a hydraulic closed circuit.

The driving means of the present angular positioning system further comprises control means. The control means are suitable for controlling the pumping means and therefore for accurately controlling rotation of the first and second mutually rotatable elements.

In a blade pitch mechanism, control of time and pressure of fluid injected into the hydraulic chambers allows the blade to be accurately rotated for a precise angle of attack according to the wind speed and thus for efficiently controlling the rotational speed of the hub of the wind turbine according to the conditions and the power requirements. The expansion of the hydraulic chamber causes the blade to be pitched in a controlled manner with no wear of inner parts such gear teeth.

In embodiments in which a number of hydraulic chambers are provided, the pump means are arranged connecting two adjacent hydraulic chambers to each other such that fluid is pumped from one hydraulic chamber to another hydraulic chamber. The hydraulic chambers can be grouped in sets of hydraulic chambers. More specifically, the driving means may comprise a number of sets of chambers covering different angles of the first and second elements. Each set of chambers may have pump means associated therewith.

All of chambers are capable of covering an angle ranging from 0 to 90 degrees. In some embodiments it is preferred that at least one chamber of the sets of chambers may cover an angle ranging from 0 to 24 degrees. These values refer to the angular extension on the perimeter of the first element or the second element. The first and the second elements are typically circular in cross-section.

The present angular positioning system may further include at least one bearing arrangement. The bearing arrangement may be of the conventional type, that is, comprising a number of rolling elements arranged in two or more rows. The rolling elements may comprise at least one series of balls suitable for supporting high loads and reducing friction and at least two bearing races: an outer bearing race connected to the rotor hub and an inner race connected either to a blade root portion or to an extender.

In other, preferred embodiments, the present angular positioning system alternatively comprises at least one bearing arrangement comprising a hydraulic mechanism instead of the above mentioned rolling elements. The hydraulic mechanism includes at least one hydraulic chamber. The hydraulic chamber or hydraulic chambers are formed between the first and the second elements.

A number of fluid injectors are also provided. The injectors are adapted for injecting fluid into the chambers. Control means are further provided for separately controlling the pressure of the fluid injected by the injectors. The pressure of the fluid supplied by the injectors is thus controlled separately and their values can be varied depending on at least loads on the first or the second element. The control of the pressure supplied by the injectors allows the radial distance between the first and second mutually rotatable elements to be accurately varied. In a practical case, this is performed by injecting more or less quantity of oil into a particular hydraulic chamber. Concentration of radial loads can be highly reduced by the provision of a number of injectors working simultaneously and controlled separately.

The provision of a number of injectors distributed around the length of the first and second elements is highly advantageous. The relative movement between the blade and the hub in a pitch bearing is very small, such as of the order of several degrees. This small relative movement occurs from a given wind speed value. When this relative movement takes place, the relative angular speed is very slow, of the order of 5 degrees per second. The provision of a number of injectors working simultaneously and controlled separately has the advantage that the film of hydraulic fluid between the blade and the hub is continuous. This also allows to compensate for the action of the gravity in the blade changing angular position. By providing several injectors for injecting fluid into the chambers the bearing races are prevented from being contacted to each other when in use.

The separate control of the injectors advantageously allows different values of pressure to be supplied into the hydraulic chamber of the hydraulic bearing. This allows working loads in specific areas of the bearing to be reduced thus reducing wear and damages. This is important since as the blades are rotating, the portion of the blades under higher loads is varied so that more tensions are generated on a particular portion of the bearing. When a blade is in a horizontal position the bearing is not subjected to the same loads that when they are in a vertical position. Since these positions are predictable, the pressure of the fluid supplied by the injectors is varied depending on at least loads on the first or the second element according to said blade positions. In general, the fluid pressure inside the chamber can be controlled depending on at least one of the parameters relating to weight of the rotor elements, wind loads, blade azimuth position and blade pitch angle, etc. By increasing the pressure of the fluid supplied by the injectors in those regions subjected to higher loads a better load compensation can be achieved avoiding the bearing races to contact each other.

In some embodiments of the present rotating system, a single film-like chamber is formed between the first and second elements. This allows their relative rotation to be facilitated. In advantageous embodiments of the rotating system, the injectors may be provided distributed along the entire perimeter of the first and second elements.

The control means may be adapted for controlling at least one hydraulic pump associated with at least one of the injectors. However, each of the injectors themselves could be adapted for adjusting the pressure of the fluid injected into the chambers.

A wind turbine is also disclosed comprising the above angular positioning system. The angular positioning system in the present wind turbine serves the purpose of driving in rotation first and second mutually rotatable elements in the wind turbine.

In some embodiments, the angular positioning system may be at least part of the wind turbine pitch mechanism. In this case, the first element is the wind turbine rotor hub or it is associated therewith while the second element is the wind turbine rotor blade or it is associated therewith.

In some other embodiments, the angular positioning system may be at least part of the wind turbine yaw mechanism. In this case, the first element is the wind turbine tower or it is associated therewith, and the second element is the wind turbine nacelle or it is associated therewith.

The present wind turbine may comprise a number of angular positioning systems having a number of driving means arranged at different planes. The present wind turbine may comprise a number of angular positioning systems having a number of bearings arranged at different planes. In specific embodiments, the angular positioning system in the present wind turbine may further include a bearing arrangement corresponding to or being part of a pitch mechanism and/or a yaw mechanism in the wind turbine. Suitable sealing means may be also provided with the purpose of preventing leaks of hydraulic fluid in the angular positioning system. The sealing means would be preferably associated with the hub, or in general to the one of the elements which is stationary.

According to what it has been explained above, the present angular positioning system is a dynamic system in which variable resisting loads are generated in order to compensate for the variable working loads. This is applicable for both the pitch drive and the pitch bearing in this angular positioning system.

With the above configuration, the problem of the axial displacement of the blades resulting from their changing position when in use allows it to be at least partially reduced. The provision of a number of injectors controlled separately by the control means (applicable both to pitch drive and pitch bearing) allows several, different points of pressure to applied in a controlled manner to different portions of the angular positioning system.

The present angular positioning ***system*** is capable of combining the functions of both a pitch drive that contribute with distributed azimuthal, radial, and axial loads around the interface between blade and hub and a pitch bearing carrying out a smart hydraulic pressure distribution for compensating radial and axial loads along the interface between blade and hub.

Additional objects, advantages and features of embodiments will become apparent to those skilled in the art upon examination of the description, or may be learned by practice of the present disclosure.

### BRIEF DESCRIPTION OF THE DRAWINGS

Particular embodiments of the present angular positioning system will be described in the following by way of non-limiting examples.

This description is given with reference to the appended drawings, in which:
Figures 1-3 are schematic plan views of one embodiment of the present angular positioning system being part of a wind turbine pitch mechanism in which several relative angular positions of the first and the second elements are shown;
Figure 1 a diagrammatically shows one example of a hydraulic chamber with the protruding portion of the second element (a blade portion of a wind turbine pitch mechanism) dividing the hydraulic chamber into two hydraulic sub-chambers;
Figures 4-6 are schematic partial perspective views corresponding to the embodiment in figures 1-3; and
Figures 7-8 are partial perspective views of the embodiment of the angular positioning system shown in figures 1-6.

### DETAILED DESCRIPTION OF EMBODIMENTS

In these figures, one embodiment of an angular positioning system that is part of a wind turbine pitch mechanism is shown. This however could be applied to other rotating mechanism in a wind turbine such as a wind turbine yaw mechanism.

Like reference numerals refer to like parts throughout the description of several views of the drawings.

### Pitch drive

According to the figures, a wind turbine pitch mechanism 100 is schematically shown. The pitch mechanism 100 comprises first and second mutually rotatable elements 200, 300. In this particular embodiment the first element correspond to a wind turbine rotor hub 200, or a portion thereof, and the second element correspond to the wind turbine rotor blade 300 or a portion thereof such as a metallic blade extension or adapter.

As illustrated, both elements 200, 300 are substantially circular in cross-section. The wind turbine rotor blade 300 is arranged inside the wind turbine rotor hub 200 so the latter surrounds the former allowing relative rotation between them.

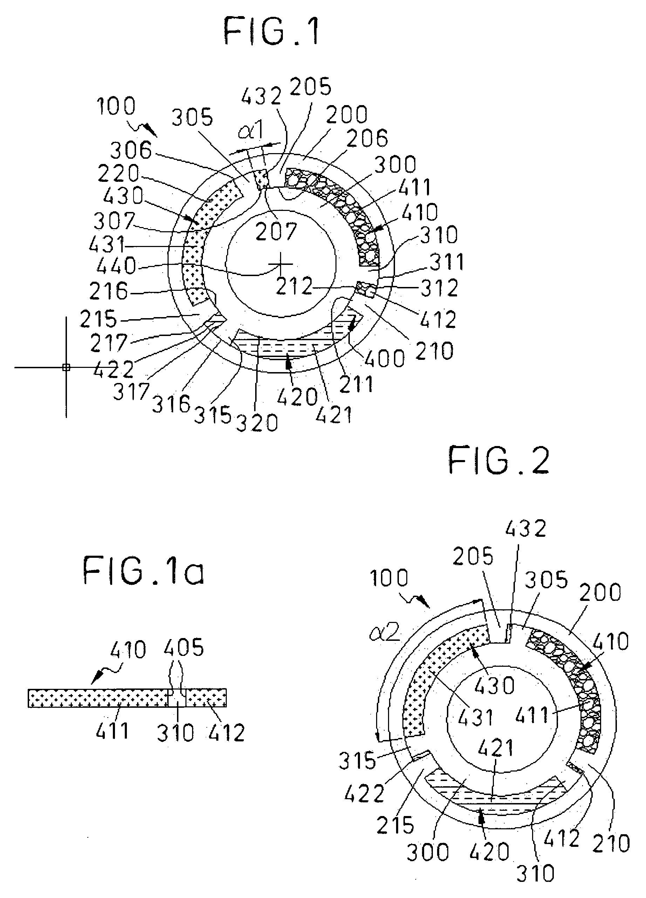

The pitch mechanism 100 shown in the figures 1-8 comprises driving means 400 capable of driving the rotor hub 200 and the rotor blade 300 in rotation. In the embodiment shown in the figures, the driving means 400 comprise a set of three hydraulic chambers 410, 420, 430. Each of these hydraulic chambers 410, 420, 430 are defined by respective protruding portions 205, 210, 215 of the rotor hub 200 and protruding portions 305, 310, 315 of the rotor blade 300.

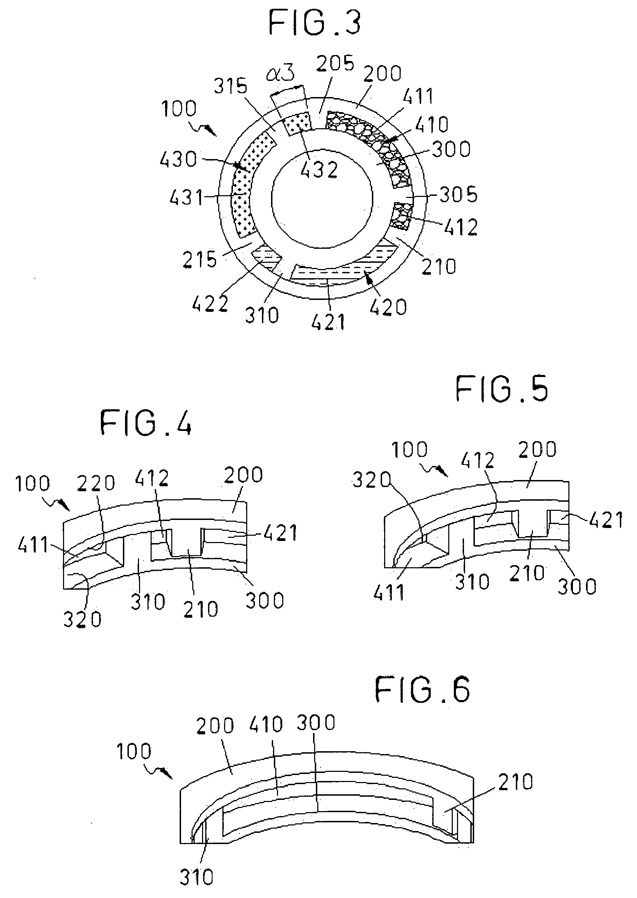

A particular example of the hydraulic chambers 410, 420, 430 will be now described in connection with figure 1 only. For the sake of clarity, figures 2 and 3 show the structure but not all the reference numerals.

As shown in figure 1, the protruding portions 205, 210, 215 extend radially from the hub 200 and the protruding portions 305, 310, 315 extend radially from the blade 300. The protruding portions 305, 310, 315 of the blade 300 extend radially outwards, that is, to the hub 200. The protruding portions 205, 210, 215 of the hub 200 extend radially inwards, that is, to the blade 300. End walls 306, 311, 316 of the protruding portions 305, 310, 315 of the blade 300 are arranged in contact with the inner wall 220 of the hub 200. Likewise, end walls 206, 211, 216 of the protruding portions 205, 210, 215 of the hub 200 are arranged in contact with the outer wall 320 of the blade 300.

Referring now to figures 1-8, hydraulic chambers 410, 420, 430 are provided.

The hydraulic chambers 410, 420, 430 are each defined by the space between two mutually spaced apart portions 205-210, 210-215, 215-205 of the hub 200. Specifically, a first hydraulic chamber 410 is defined by the space between adjacent protruding portions 205-210 of the hub 200; a second hydraulic chamber 420 is defined by the space between adjacent protruding portions 210-215 of the hub 200; and a third hydraulic chamber 430 is defined by the space between adjacent protruding portions 215-205 of the hub 200.

As shown in figures 1-3 of the drawings, inside each hydraulic chamber 410, 420, 430 a respective protruding portion 305, 310, 315 of the blade 300 is provided. As the blade 300 rotates relative to the hub 200, the respective protruding portion 305, 310, 315 moves inside the corresponding hydraulic chamber 410, 420, 430. Provision of a protruding portion 305, 310, 315 inside a hydraulic chamber 410, 420, 430 forms variable volume sub-chambers 411, 412, 421, 422, 431, 432, respectively. More specifically, inside the first hydraulic chamber 410, formed by the adjacent protruding portions 205, 210 of the hub 200, a first protruding portion 305 of the blade 300 is movably provided therein defining two corresponding variable volume sub-chambers 411, 412. Likewise, inside the second hydraulic chamber 420, formed by the adjacent protruding portions 210, 215 of the hub, a second protruding portion 310 of the blade 300 is movably provided therein defining two corresponding variable volume sub-chambers 421, 422. Finally, inside the third hydraulic chamber 430, formed by the adjacent protruding portions 215, 205 of the hub, a third protruding portion 315 of the blade 300 is movably provided therein defining two corresponding variable volume sub-chambers 431, 432.

According to the above configuration, the volume of each hydraulic chamber 410, 420, 430 is variable according to the relative position of the rotor hub 200 and the rotor blade 300 and consequently their corresponding protrusions 205, 210, 215 and 305, 310, 315. The relative position of the rotor hub 200 and the rotor blade 300 is defined by an angular displacement α.

Referring to figure 1, the angular displacement α is measured in a plane of rotation parallel to the figures, or substantially perpendicular to the axis of rotation 440 of the rotor hub 200 and the rotor blade 300. The angular displacement α corresponds to the angular distance between adjacent portions 205, 210, 215 and 305, 310, 315 of the hub 200 and the blade 300, respectively, that is, angular distances 205-305, 210-310, 215-315. More specifically the angle α is defined as the angular distance between one side surface 207, 212, 217 of the portions 205, 210, 215 of the rotor hub 200 and the corresponding side surface 307, 312, 317 of the portions 305, 310, 315 of the rotor blade 300 facing said hub side surfaces 207, 212, 217. This angle α may take values of, for example, α₁= 5 degrees (figures 1 and 4), α₃= 15 degrees (figures 2 and 5) or even α₂= 90 degrees (figures 3 and 6).

Depending on the relative angular displacement α of the rotor hub 200 and the rotor blade 300 the hydraulic chambers 410, 420, 430, 411, 421, 431 and therefore the corresponding sub-chambers 411, 412, 421, 422, 431, 432 will have a greater or smaller volume.

The driving means 400 of the angular positioning system 100 further comprise pump means including a number of injectors 405. Injectors 405 are suitable for injecting hydraulic fluid such as oil into the hydraulic chambers 410, 420, 430 of the pitch mechanism 100. The pressure at the chambers 410, 420, 430 gives rise a relative torque between blade 300 and hub 300.

Injectors 405 connect hydraulic sub-chambers 411-412 of chamber 410 in fluid communication to each other. Further injectors 405 connect hydraulic sub-chambers 421-422 of chamber 420 in fluid communication to each other and additional injectors 405 connect hydraulic sub-chambers 431-432 of chamber 430 in fluid communication to each other. Injectors 450 may be independent or common injectors 450. In general hydraulic chambers are connected to each other such that hydraulic fluid is pumped from one hydraulic sub-chamber to another hydraulic sub-chamber.

Injection of hydraulic fluid into the hydraulic chambers 410, 420, 430 through injectors 405 causes some sub-chambers to expand and some sub-chambers to contract (hydraulic fluid is compressed). This involves variations in the value of the angular displacement α. By means of a selective injection of the hydraulic fluid into the sub-chambers 411,412, 421, 422, 431, 432 the direction of rotation of the blade 300 can be varied. This results in pitching of the blade 300 relative to the hub 200, that is, rotation of the blade 300 around its longitudinal axis (i.e. the axis extending from the blade root to the blade tip). This allows the angle of attack of the blades 300 to be adjusted precisely according to the wind speed in order to efficiently control the rotational speed of the hub 200.

The driving means 400 of the pitch drive 100 further comprises control means (not shown) for controlling the pumps. The control means comprises a control unit that allows controlling the fluid that is injected into the hydraulic chambers 410, 420, 430 for accurately controlling the rotation of the hub 200 and the blade 300.

The present angular positioning system 100 further comprises at least one pitch bearing arrangement which will be disclosed below.

### Pitch bearing

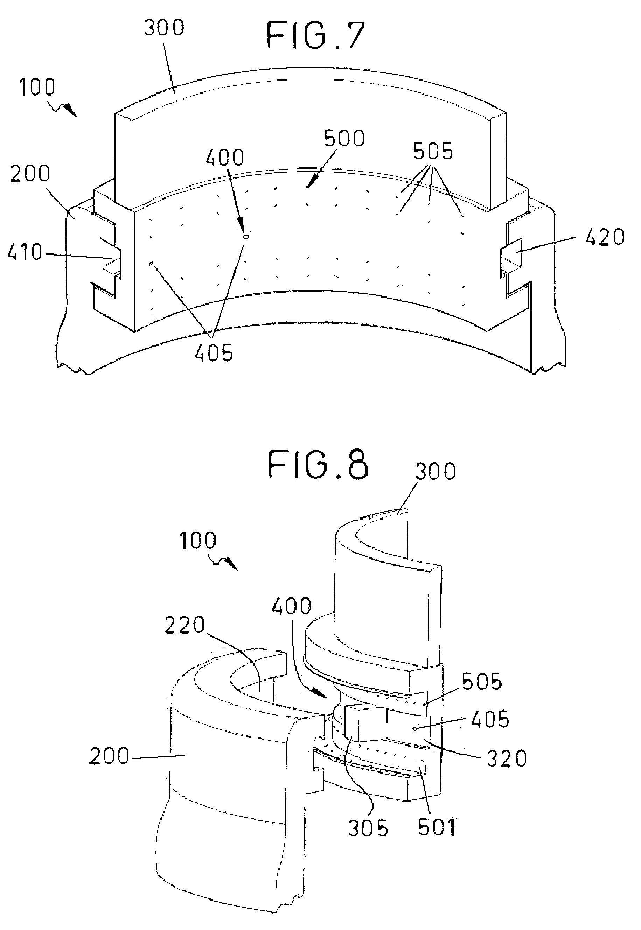

The pitch bearing arrangement is indicated at 500 in figures 7 and 8 of the drawings. The pitch bearing 500 in the embodiment shown is a hydraulic bearing comprising a single hydraulic film-like chamber 501. This hydraulic chamber 501 is formed between the first and the second elements, that is, between an inner wall 220 of the hub 200 and an outer wall 320 of the blade 300 of the wind turbine. This allows the rotation of the blade 300 relative to the hub 200 to be facilitated when driven. Note that the terms hub 200 and blade 300 may refer to portions or parts thereof.

As in the driving means 400 of the above disclosed pitch drive 100, the present pitch bearing 500 includes a number of injectors 505. The injectors 505 are distributed around the length of one portion of the blade 300, such as a metallic blade extension or adapter, as shown in figures 7 and 8. The plurality of injectors 505 are adapted for injecting hydraulic fluid such as oil into the hydraulic chamber 501 defined between the hub 200 and the blade 300.

Control means are further provided for separately controlling the pressure of the hydraulic fluid injected by the injectors 505. The pressure of the hydraulic fluid supplied by the injectors 505 can be varied through the control means (not shown) depending on at least loads on the rotor hub 200 and the rotor blade 300 of the wind turbine. The injectors 505 are separately controlled in order to advantageously compensate for the action of the gravity in the blade changing angular position while allowing total working loads on the bearing arrangement 500 to be reduced in specific areas thereof. In this respect, the pressure of the fluid supplied by the injectors 505 can be increased in those regions subjected to higher loads. Good load compensation is thus achieved avoiding the elements 200, 300 to contact each other.

The disclosed angular positioning system 100 can be advantageously used in a wind turbine for rotation of the blades 300 relative to the hub 200 in a pitch mechanism. However, the disclosed angular positioning system 100 can be also advantageously used in a wind turbine for rotation of the nacelle relative to the tower a yaw mechanism. In any case, a number of angular positioning systems 100 having a number of driving means 400 and/or hydraulic bearings 500 may be provided arranged at different planes, preferably at substantially mutually parallel planes.

The present angular positioning system 100 is capable of at least reducing net radial loads on the hydraulic bearing 500 avoiding the use of stiffening solutions which are required present in prior art pitch mechanisms. The present angular positioning system 100 is also capable of ensuring robustness over deformations of very flexible blades 300 and hubs 200 in a wind turbine.

Although only a number of particular embodiments and examples of the present angular positioning system have been disclosed herein, it will be understood by those skilled in the art that other alternative embodiments and/or uses and obvious modifications as well as equivalents thereof are possible. For example, the present angular positioning system is applicable both to onshore and offshore wind turbines. On the other hand, the present angular positioning system has been disclosed and shown with the blade fitted around the hub such that a portion of the hub is rotatably arranged outside a portion of the blade. However, in alternative embodiments, the angular positioning system could be for a rotating system such as a pitch drive where a portion of the hub would be rotatably arranged inside a portion of the blade.

This disclosure covers all possible combinations of the particular embodiments described herein. Reference signs related to drawings and placed in parentheses in a claim are solely for attempting to increase the intelligibility of the claim, and shall not be construed as limiting the scope. Thus, the scope of the present disclosure should not be limited by particular embodiments, but should be determined only by the claims that follow.

## Claims

1. An angular positioning system (100) for a wind turbine, the angular positioning system (100) comprising first and second mutually rotatable elements (200, 300) and driving means (400) for driving at least one of said elements (200, 300) in rotation, the driving means (400) comprising:
- at least one hydraulic chamber (410, 420, 430)
- pump means (405) for filling the hydraulic chamber (410, 420, 430) with fluid, and
- control means for controlling said pumping means (405)
**characterized in that** the hydraulic chamber (410, 420, 430) has a volume therein that is defined by the space between at least two mutually spaced apart portions (205, 210, 215; 305, 310, 315) of one of the first and second elements (200; 300) in the plane of rotation; a respective protruding portion (305, 310, 315; 205, 210, 215) of the other of the first and second elements (300; 200) being movably provided inside the respective hydraulic chamber (410, 420, 430) defining corresponding variable volume sub-chambers (411, 412, 421, 422, 431, 432) and **in that** the control means are adapted to control the pumping means (405) for varying the volume of said sub-chambers (411,412, 421, 422, 431, 432) causing the first and the second elements (200, 300) to be rotated to each other.

2. The angular positioning system (100) of claim 1, wherein the driving means (400) comprise a number of sets of chambers (410, 420, 430) covering different angles (α) of the first and second elements (200, 300), each set of chambers (410, 420, 430) having pump means (405) associated therewith.

3. The angular positioning system (100) of any of the preceding claims, wherein a number of hydraulic chambers (410, 420, 430) are provided and the pump means (405) are arranged connecting two adjacent hydraulic sub-chambers to each other such that fluid is pumped from one hydraulic chamber to another.

4. The angular positioning system (100) of claim 2, wherein at least one chamber of the set of chambers (410, 420, 430) covers an angle (α) ranging from 0 to 90°.

5. The angular positioning system (100) of any of the preceding claims, wherein it further includes at least one bearing arrangement comprising rolling elements.

6. The angular positioning system (100) of any of the preceding claims, wherein it further includes at least one bearing arrangement (500) comprising a hydraulic mechanism including at least one hydraulic chamber (501) formed between the first and second elements (200, 300), one or several fluid injectors (505) and control means for controlling the pressure of the fluid injected by the injectors (505) depending on loads on the first or the second elements (200, 300).

7. The angular positioning system (100) of claim 6, wherein it comprises a single film-like chamber (501) formed between the first and second elements (100, 200) for facilitating their relative rotation, and a number of injectors (505) controlled separately by the control means allowing different points of pressure to be applied in different portions of the hydraulic bearing arrangement (500).

8. The angular positioning system (100) of claim 6 or 7, wherein a number of injectors (505) are provided distributed along the entire perimeter of the first and second elements (200, 300).

9. The angular positioning system (100) of any of the claims 6 to 8, wherein the control means are adapted for controlling at least one hydraulic pump associated with at least one of the injectors (505).

10. The angular positioning system (100) of any of the claims 6 to 9, wherein the control means are adapted for independently controlling a number of hydraulic pumps associated with corresponding injectors (505).

11. The angular positioning system (100) of any of the claims 6 to 10, wherein the fluid pressure inside the chamber (501) is controlled by the control unit depending on at least one of the parameters relating to weight of at least one of the first and second elements (200, 300), wind loads, blade azimuth position and blade pitch angle.

12. The angular positioning system (100) of any of the claims 6 to 11, wherein the first and second elements (200, 300) are counter shaped such that one can be fitted into the other in a way that they remain spaced apart in radial and axial directions when in use.

13. A wind turbine comprising the angular positioning system (100) of any of the preceding claims for driving at least one of a first and second mutually rotatable elements (200, 300) of the wind turbine in rotation.

14. The wind turbine of claim 13, wherein the angular positioning system (100) is at least part of the wind turbine pitch mechanism, the first element being the rotor hub (200) or being associated therewith, and the second element being the rotor blade (300) or being associated therewith.

15. The wind turbine of claim 13 or 14, wherein the angular positioning system (100) is at least part of the wind turbine yaw mechanism, the first element being the wind turbine tower or being associated therewith, and the second element being the wind turbine nacelle or being associated therewith.

16. The wind turbine of any of the claims 13 to 15, wherein it comprises a number of angular positioning systems (100) having a number of driving means (400) provided at different planes.

17. The wind turbine of claim claims 13 to 16, wherein it comprises a number of angular positioning systems (100) having a number of bearing arrangements (500) provided at different planes.

18. The wind turbine of any of the claims 13 to 17, wherein it further comprises sealing means for preventing leaks of hydraulic fluid.

19. The wind turbine of any of the claims 13 to 18, wherein the angular positioning system (100) further includes a bearing arrangement (500) corresponding to or being part of a pitch mechanism and/or a yaw mechanism in the wind turbine.

## Patentansprüche

1. Ein Winkelpositionierungssystem (100) für eine Windturbine, wobei das Winkelpositionierungssystem (100) erste und zweite bezüglich einander drehbare Elemente (200, 300) und ein Antriebsmittel (400) zum Antrieb von mindestens einem der drehbaren Elemente (200, 300) umfasst, wobei das Antriebsmittel (400) folgendes umfasst:
- mindestens eine hydraulische Kammer (410, 420, 430)
- ein Pumpmittel (405) zur Füllung der hydraulischen Kammer (410, 420, 430) mit Flüssigkeit, und
- ein Steuermittel zur Steuerung des Pumpmittels (405),
**dadurch gekennzeichnet, dass** die hydraulische Kammer (410, 420, 430) ein innerliches Volumen hat, das durch den Raum zwischen mindestens zwei voneinander getrennten Teilen (205, 210, 215; 305, 310, 315) von einem der ersten und zweiten Elemente (200; 300) in der Drehungsebene definiert ist; wobei ein jeweiliger herausragender Teil (305, 310, 315; 205, 210, 215) des anderen der ersten und zweiten Elemente (300; 200) innerhalb der jeweiligen hydraulischen Kammer (410, 420, 430) beweglich bereitgestellt ist, wodurch entsprechende Unterkammern (411, 412, 421, 422, 431, 432) variablen Volumens definiert werden und dadurch, dass das Steuermittel angepasst ist, um das Pumpmittel (405) zur Variation des Volumens der Unterkammern (411, 412, 421, 422, 431, 432) zu steuern, was die Drehung der ersten und zweiten Elemente (200, 300) bezüglich einander bewirkt.

2. Das Winkelpositionierungssystem (100) des Anspruchs 1, wobei das Antriebsmittel (400) eine Anzahl von Reihen von Kammern (410, 420, 430) umfasst, die unterschiedliche Winkel (α) der ersten und zweiten Elemente (200, 300) decken, wobei jede Reihe von Kammern (410, 420, 430) jeweils ein damit assoziiertes Pumpmittel (405) hat.

3. Das Winkelpositionierungssystem (100) von einem der vorhergehenden Ansprüche, wobei eine Anzahl von hydraulischen Kammern (410, 420, 430) bereitgestellt sind und das Pumpmittel (405) so angeordnet ist, dass es zwei aneinander angrenzende hydraulische Unterkammern miteinander verbindet, so dass Flüssigkeit von einer hydraulischen Kammer in die andere gepumpt wird.

4. Das Winkelpositionierungssystem (100) des Anspruchs 2, wobei mindestens eine Kammer der Reihe von Kammern (410, 420, 430) einen Winkel (α) deckt, der von 0 bis 90° reicht.

5. Das Winkelpositionierungssystem (100) von einem der vorhergehenden Ansprüche, wobei es weiterhin mindestens eine Lageranordnung umfassend Wälzkörper umfasst.

6. Das Winkelpositionierungssystem (100) von einem der vorhergehenden Ansprüche, wobei es weiterhin mindestens eine Lageranordnung (500), welche einen hydraulischen Mechanismus umfassend mindestens eine zwischen den ersten und den zweiten Elementen (200, 300) gebildete hydraulische Kammer (501) umfasst, einen oder mehrere Flüssigkeitsinjektoren (505) und ein Steuermittel zur Steuerung des Drucks der durch die Injektoren (505) eingespritzten Flüssigkeit in Abhängigkeit von den Beanspruchungen des ersten oder des zweiten Elements (200, 300) umfasst.

7. Das Winkelpositionierungssystem (100) des Anspruchs 6, wobei es weiterhin eine einzige zwischen den ersten und zweiten Elementen (100, 200) gebildete filmartige Kammer (501) umfasst, um deren Drehung bezüglich einander zu ermöglichen, und eine Anzahl von Injektoren (505) umfasst, die durch das Steuermittel einzeln gesteuert werden, wodurch verschiedene Druckpunkte in verschiedenen Teilen der hydraulischen Lageranordnung (500) ausgeübt werden können.

8. Das Winkelpositionierungssystem (100) des Anspruchs 6 oder 7, wobei eine Anzahl von Injektoren (505) verteilt entlang der gesamten Umfangslänge der ersten und zweiten Elemente (200, 300) bereitgestellt sind.

9. Das Winkelpositionierungssystem (100) von einem der Ansprüche 6 bis 8, wobei das Steuermittel zur Steuerung von mindestens einer mit mindestens einem der Injektoren (505) assoziierten hydraulischen Pumpe angepasst ist.

10. Das Winkelpositionierungssystem (100) von einem der Ansprüche 6 bis 9, wobei das Steuermittel zur unabhängigen Steuerung von einer Anzahl von mit entsprechenden Injektoren (505) assoziierten hydraulischen Pumpen angepasst ist.

11. Das Winkelpositionierungssystem (100) von einem der Ansprüche 6 bis 10, wobei der Flüssigkeitsdruck innerhalb der Kammer (501) durch die Steuereinheit in Abhängigkeit von mindestens einem der auf das Gewicht von mindestens einem der ersten und zweiten Elemente (200, 300), auf Windbeanspruchungen, auf die Blattazimutposition und auf den Blattverstellwinkel bezogene Parameter gesteuert wird.

12. Das Winkelpositionierungssystem (100) von einem der Ansprüche 6 bis 11, wobei das erste und das zweite Element (200, 300) eine sich gegenseitig ergänzende Form haben, so dass das eine in das andere eingepasst werden kann, so dass sie im Einsatz in radialen und axialen Richtungen voneinander getrennt bleiben.

13. Eine Windturbine umfassend das Winkelpositionierungssystem (100) von einem der vorhergehenden Ansprüche zum Antrieb von mindestens einem von einem ersten und zweiten bezüglich einander drehbaren Elementen (200, 300) der drehenden Windturbine.

14. Die Windturbine des Anspruchs 13, wobei das Winkelpositionierungssystem (100) mindestens Teil von der Blattverstellvorrichtung der Windturbine ist, das erste Element die Rotornabe (200) ist oder damit assoziiert ist, und das zweite Element das Rotorblatt (300) ist oder damit assoziiert ist.

15. Die Windturbine des Anspruchs 13 oder 14, wobei das Winkelpositionierungssystem (100) mindestens Teil der Vorrichtung zur Windrichtungsnachführung der Windturbine ist, das erste Element der Windturbinenturm ist oder damit assoziiert ist, und das zweite Element die Windturbinengondel ist oder damit assoziiert ist.

16. Die Windturbine von einem der Ansprüche 13 bis 15, wobei sie eine Anzahl von Winkelpositionierungssystemen (100) umfasst, die eine Anzahl von auf verschiedenen Ebenen bereitgestellten Antriebsmitteln (400) hat.

17. Die Windturbine von einem der Ansprüche 13 bis 16, wobei sie eine Anzahl von Winkelpositionierungssystemen (100) umfasst, die eine Anzahl von auf verschiedenen Ebenen bereitgestellten Lageranordnungen (500) hat.

18. Die Windturbine von einem der Ansprüche 13 bis 17, wobei sie weiterhin ein Dichtungsmittel umfasst, um Ausläufe von hydraulischer Flüssigkeit zu verhindern.

19. Die Windturbine von einem der Ansprüche 13 bis 18, wobei das Winkelpositionierungssystem (100) weiterhin eine Lageranordnung (500) umfasst, die einer Blattverstellvorrichtung und/oder einer Vorrichtung zur Windrichtungsnachführung in der Windturbine entspricht, oder Teil davon ist.

## Revendications

1. Un système de positionnement angulaire (100) pour une éolienne, comprenant le système de positionnement angulaire (100) des éléments premier et deuxième (200, 300) pivotantes l'un par rapport à l'autre et un moyen d'entraînement (400) pour entraîner au moins un desdits éléments (200, 300) en rotation, comprenant le moyen d'entraînement (400) :
- au moins une chambre hydraulique (410, 420, 430)
- un moyen de pompage (405) pour remplir la chambre hydraulique (410, 420, 430) de fluide, et
- un moyen de contrôle pour contrôler ledit moyen de pompage (405),
**caractérisé en ce que** la chambre hydraulique (410, 420, 430) a un volume dans son intérieur qui est défini par l'espace existant entre au moins deux parties séparées l'une de l'autre (205, 210, 215; 305, 310, 315) d'un des éléments premier et deuxième (200; 300) dans le plan de rotation ; une respective partie faisant saillie (305, 310, 315; 205, 210, 215) de l'autre des éléments premier et deuxième (300; 200) qui es fournie de façon mobile dans la respective chambre hydraulique (410, 420, 430) définissant des correspondantes sous-chambres à volume variable (411, 412, 421, 422, 431, 432) et **en ce que** le moyen de contrôle est adapté pour contrôler le moyen de pompage (405) afin de varier le volume desdites sous-chambres (411, 412, 421, 422, 431, 432) entraînant ainsi la rotation des éléments premier et deuxième (200, 300) l'un par rapport à l'autre.

2. Le système de positionnement angulaire (100) de la revendication 1, dans lequel le moyen d'entraînement (400) comprend un nombre de séries de chambres (410, 420, 430) qui couvrent des angles différents (α) des éléments premier et deuxième (200, 300), ayant chaque série de chambres (410, 420, 430) un moyen de pompage (405) associé avec elle.

3. Le système de positionnement angulaire (100) de l'une quelconque des revendications précédentes, dans lequel un nombre de chambres hydrauliques (410, 420, 430) sont fournies et le moyen de pompage (405) est disposé connectant deux sous-chambres hydrauliques adjacentes l'une avec l'autre de façon que du fluide est pompé d'une chambre hydraulique à l'autre.

4. Le système de positionnement angulaire (100) de la revendication 2, dans lequel au moins une chambre de la série de chambres (410, 420, 430) couvre un angle (α) allant de 0 à 90°.

5. Le système de positionnement angulaire (100) de l'une quelconque des revendications précédentes, dans lequel il inclut en outre au moins un agencement de roulements comprenant des éléments roulants.

6. Le système de positionnement angulaire (100) de l'une quelconque des revendications précédentes, dans lequel il inclut en outre au moins un agencement de roulements (500) comprenant un mécanisme hydraulique incluant au moins une chambre hydraulique (501) formée entre les éléments premier et deuxième (200, 300), un ou plusieurs injecteurs de fluide (505) et un moyen de contrôle pour contrôler la pression du fluide injecté par les injecteurs (505) dépendant des charges sur les éléments premier ou deuxième (200, 300).

7. Le système de positionnement angulaire (100) de la revendication 6, dans lequel il comprend une seule chambre à film (501) formée entre les éléments premier et deuxième (100, 200) pour faciliter leur rotation l'un par rapport à l'autre, et un nombre d'injecteurs (505) indépendamment contrôlés par le moyen de contrôle permettant l'application de différents points de pression dans des parties différentes de l'agencement de roulements hydraulique (500).

8. Le système de positionnement angulaire (100) de la revendication 6 ou 7, dans lequel un nombre d'injecteurs (505) sont fournis distribués le long du périmètre total des éléments premier et deuxième (200, 300).

9. Le système de positionnement angulaire (100) de l'une quelconque des revendications 6 à 8, dans lequel le moyen de contrôle est adapté pour contrôler au moins une pompe hydraulique associée avec au moins un des injecteurs (505).

10. Le système de positionnement angulaire (100) de l'une quelconque des revendications 6 à 9, dans lequel le moyen de contrôle est adapté pour contrôler de façon indépendante un nombre de pompes hydrauliques associées avec des injecteurs (505) correspondants.

11. Le système de positionnement angulaire (100) de l'une quelconque des revendications 6 à 10, dans lequel la pression de fluide dans la chambre (501) est contrôlée par l'unité de contrôle dépendant d'au moins un des paramètres liés au poids d'au moins un des éléments premier et deuxième (200, 300), aux charges de vent, à la position d'azimut des pales et à l'angle de pas de pale.

12. Le système de positionnement angulaire (100) de l'une quelconque des revendications 6 à 11, dans lequel les éléments premier et deuxième (200, 300) ont une forme complémentaire de façon que l'un peut être emboîté dans l'autre de façon qu'ils restent séparés dans des directions radiale et axiale lors du fonctionnement.

13. Une éolienne comprenant le système de positionnement angulaire (100) de l'une quelconque des revendications précédentes pour entraîner au moins un des éléments premier et deuxième (200, 300) pivotants l'un par rapport à l'autre de l'éolienne en rotation.

14. L'éolienne de la revendication 13, dans laquelle le système de positionnement angulaire (100) fait au moins partie du mécanisme de commande de pas de pale de l'éolienne, étant le premier élément le moyeu (200) ou étant associé avec celui-ci, et étant le deuxième élément la pale du rotor (300) ou étant associé avec celle-ci.

15. L'éolienne de la revendication 13 ou 14, dans laquelle le système de positionnement angulaire (100) fait au moins partie du mécanisme de contrôle de lacet de l'éolienne, étant le premier élément la tour de l'éolienne ou étant associé avec celle-ci, et étant le deuxième élément la nacelle de l'éolienne ou étant associé avec celle-ci.

16. L'éolienne de l'une quelconque des revendications 13 à 15, dans laquelle elle comprend un nombre de systèmes de positionnement angulaire (100) ayant un nombre de moyens d'entraînement (400) fournis dans des plans différents.

17. L'éolienne de l'une quelconque des revendications 13 à 16, dans laquelle elle comprend un nombre de systèmes de positionnement angulaire (100) ayant un nombre d'agencements de roulements (500) fournis dans des plans différents.

18. L'éolienne de l'une quelconque des revendications 13 à 17, dans laquelle elle comprend en outre un moyen de joint pour prévenir des fuites de fluide hydraulique.

19. L'éolienne de l'une quelconque des revendications 13 à 18, dans laquelle le système de positionnement angulaire (100) inclut en outre un agencement de roulements (500) correspondant à ou faisant partie d'un mécanisme de commande de pas de pale et/ou d'un mécanisme de contrôle du lacet dans l'éolienne.
